Europäisches Patentamt

European Patent Office

Office européen des brevets

(19)

(11) Numéro de publication: **0 130 928**
**A 1**

# (12) DEMANDE DE BREVET EUROPEEN

(21) Numéro de dépôt: 84420108.7

(22) Date de dépôt: 27.06.84

(51) Int. Cl.⁴: **H 04 M 11/06**

(30) Priorité: 30.06.83 FR 8311199

(43) Date de publication de la demande: 09.01.85
Bulletin 85/2

(84) Etats contractants désignés: **AT BE CH DE GB IT LI LU NL SE**

(71) Demandeur: **HORLOGERIE PHOTOGRAPHIQUE FRANCAISE, Le Bouchet, F-74130 Bonneville (FR)**

(72) Inventeur: **Legros, Michel, 28, route du Roi, F-78290 Croissy-sur-Seine (FR)**
Inventeur: **Montenot, Jean, 180, rue de Saussure, F-74130 Bonneville (FR)**

(74) Mandataire: **de Beaumont, Michel, Cabinet Poncet 7, chemin de Tillier B.P. 317, F-74008 Annecy Cedex (FR)**

(54) Ensemble poste téléphonique-terminal d'ordinateur à clavier décimal unique et alimentation locale commutable.

(57) L'interface téléphonique (1), connecté à un clavier décimal (30), est alimenté par sa seconde entrée (4) par l'intermédiaire d'un relais d'aiguillage (32) qui la connecte tantôt à une alimentation locale (11) de l'équipement d'interface homme-machine (9) tantôt à la ligne (5) par l'intermédiaire de premiers moyens interrupteurs (6) selon que la ligne est débouclée ou non. L'interface téléphonique (1) est relié à l'équipement interface homme-machine (9) par des lignes de communication de messages (19, 22) comportant un dispositif d'isolement galvanique (18, 21).

ACTORUM AG

- 1 -

0130928

ENSEMBLE POSTE TELEPHONIQUE _ TERMINAL D'ORDINATEUR A CLAVIER DECI-
MAL UNIQUE ET ALIMENTATION LOCALE COMMUTABLE.

La présente invention concerne les ensembles électroniques destinés à assurer d'une part les fonctions d'un poste
téléphonique et d'autre part les fonctions d'un terminal d'ordinateur.

Les postes téléphoniques comprennent généralement
un circuit de sonnerie, un interface téléphonique, un clavier de numérotation et un combiné téléphonique. Le clavier de numérotation
comprend d'une part des touches décimales, et d'autre part des touches de fonction par exemple pour le rappel automatique du dernier
numéro composé. L'interface téléphonique comprend une première entrée
connectée au clavier de numérotation ou de commande, une seconde entrée à deux conducteurs connectés à la ligne téléphonique par l'intermédiaire d'interrupteurs commandés par la position du combiné, une
troisième entrée connectée au combiné téléphonique. L'interface téléphonique assure les fonctions de transmission sur la ligne téléphonique d'impulsions de numérotation commandées par le clavier de numérotation ou de commande, les fonctions de transmission de modulation
entre la ligne et le combiné, la mise hors circuit du circuit de modulation de sonnerie pendant la numérotation. L'interface téléphonique est alimenté par la seule ligne téléphonique. Lorsque le combiné
est décroché, les interrupteurs sont fermés et l'alimentation se fait
par la seconde entrée de l'interface téléphonique.

Les terminaux d'ordinateurs comprennent une alimentation locale connectée au secteur généralement par l'intermédiaire
d'un transformateur d'isolement. Ils comportent un clavier connecté à
à un équipement d'interface homme-machine. Une partie du clavier est
constituée de touches décimales, comme le clavier d'un poste téléphonique, une autre partie du clavier comprenant des touches alphabétiques et des touches de fonction.

On a déjà cherché à réunir un poste téléphonique
avec un terminal d'ordinateurs pour réaliser notamment un poste de
travail unique pouvant, à partir d'un clavier comportant une partie
décimale unique, composer les numéros d'appels téléphoniques ou dialoguer avec l'ordinateur. De tels postes de travail permettent en

0130928

outre le dialogue direct entre la ligne téléphonique et l'ordinateur. Toutefois la conception de tels postes de travail pose un problème d'isolation galvanique entre la ligne téléphonique et le secteur. En effet, le clavier décimal du poste téléphonique doit nécessairement être commandé par l'interface téléphonique, lui-même alimenté par la ligne lorsque le combiné est décroché. Mais l'utilisation de ce clavier décimal lorsque le combiné est raccroché, pour commander l'équipement d'interface homme-machine, nécessite d'alimenter l'interface téléphonique par une alimentation secteur. Lorsqu'on décroche le combiné téléphonique, l'interface téléphonique assure alors une connexion électrique entre l'alimentation secteur et la ligne téléphonique, ce qui est incompatible avec les exigences d'isolement de plusieurs milliers de volts entre la ligne téléphonique et le secteur d'alimentation. Cet isolement, rendu obligatoire par toutes les normes concernant les appareils téléphoniques, est destiné à supporter les différences de potentiel entre la terre du secteur d'alimentation électrique et la terre du réseau de lignes téléphoniques.

On a cherché à résoudre ce problème en disposant deux claviers distincts, l'un pour l'interface téléphonique, et l'autre pour l'équipement interface homme-machine. Cela conduit à multiplier les touches et à compliquer l'utilisation du poste de travail. On a également proposé un clavier composite comportant une seule série de touches numériques mais deux séries isolées d'interrupteurs, dont une série commande l'interface téléphonique, et l'autre série commande l'équipement d'interface homme-machine. Ces réalisations conduisent à des dispositifs complexes et onéreux.

La présente invention vise notamment à éviter les inconvénients des dispositifs connus en proposant un ensemble poste téléphonique - terminal d'ordinateurs à clavier numérique unique et assurant une isolation suffisante entre la ligne téléphonique et le secteur d'alimentation locale. Un clavier unique, comprenant un certain nombre de touches numériques communes gérées par l'interface téléphonique, permet indifféremment de dialoguer avec l'ordinateur et de générer des commandes téléphoniques.

Pour atteindre ces objets ainsi que d'autres, la présente invention prévoit d'alimenter l'interface téléphonique en permanence par son entrée ligne, cette entrée étant tantôt alimentée par une alimentation locale et isolée de la ligne lorsque la ligne est débouclée, tantôt connectée à la ligne et isolée de l'alimentation locale lorsque le bouclage de ligne est établie; des moyens d'isolement galvanique assurent en permanence l'isolement entre l'alimentation locale et la ligne, et l'interface téléphonique est relié à l'équipement interface homme-machine par des voies de communication de messages portant également un dispositif d'isolement galvanique.

En particulier, on choisira une alimentation locale silencieuse, adaptée à l'interface téléphonique. On assure l'isolement entre le secteur d'alimentation et les lignes téléphoniques par deux barrières successives : une première barrière constituée par le transformateur électrique d'isolement des alimentations locales, et une deuxième barrière constituée d'une part par le dispositif d'isolement galvanique des voies de communication de messages et d'autre part par des moyens d'isolement galvanique entre l'alimentation locale et la ligne téléphonique.

Selon une autre caractéristique de l'invention, l'entrée ligne de l'interface téléphonique est connectée aux bornes communes d'un relais d'aiguillage à deux contacts repos-travail dont les bornes repos sont connectées à la ligne par l'intermédiaire d'un premier moyen interrupteur et dont les bornes de travail sont connectées à l'alimentation locale, le relais d'aiguillage et le premier moyen interrupteur étant actionnés par des moyens de commande selon une séquence pré-établie fonction de la phase d'exploitation.

D'autres caractéristiques et avantages de la présente invention ressortiront de la description suivante de modes de réalisation particuliers, faite en relation avec les figures jointes parmi lesquelles :

- la figure 1 représente le schéma électrique d'un premier mode de réalisation selon la présente invention ; et

- la figure 2 représente l'ensemble poste téléphonique - terminal d'ordinateurs selon la présente invention dans un second mode de réalisation.

Comme le représentent les figures, l'ensemble comprend un interface téléphonique 1 dont une première entrée 2 est connectée à un clavier de commande 3 ; une seconde entrée 4 à deux conducteurs est connectée à une ligne téléphonique 5 par l'intermédiaire de premiers moyens interrupteurs 6 ; une troisième entrée 7 est connectée à un combiné téléphonique 8. L'interface téléphonique assure, de façon connue, les fonctions habituelles de transmission sur la ligne d'impulsions de numérotation commandées par le clavier 3 de commande, la fonction de transmission de modulations entre la ligne et le combiné 8, la fonction de mise hors service des circuits de modulation et de sonnerie pendant la numérotation.

L'interface téléphonique comprend une quatrième entrée 14, connectée à un détecteur d'appels 15 lui-même connecté à la ligne téléphonique 5, l'interface téléphonique 1 assurant la commande de sonnerie 16 lors de la réception d'un signal d'appel sur la ligne téléphonique 5. Le détecteur d'appels 15 est un dispositif connu, produisant un signal sur sa borne de sortie lorsqu'il reçoit sur ses bornes d'entrée une tension alternative telle que celle produite sur la ligne 5 lors d'un appel téléphonique. Toutefois le détecteur d'appels utilisé pour la présente invention doit être un détecteur assurant l'isolation galvanique entre ses bornes d'entrée et ses bornes de sortie.

L'ensemble comprend également un équipement d'interface homme-machine 9, alimenté à partir du secteur d'alimentation 10 par l'intermédiaire d'un transformateur d'isolement non représenté sur les figures et une alimentation stabilisée produisant une tension continue. Dans un mode de réalisation préféré, l'équipement d'interface homme-machine est muni d'une sortie d'alimentation 11 susceptible d'être connectée à d'autres équipements à alimenter. Une entrée 12 assure la réception de signaux de commande provenant par exemple d'un clavier de commande, et une sortie 13 permet l'émission de messages.

L'interface téléphonique 1 comprend une cinquième entrée 17, connectée à la sortie 13 de l'équipement interface homme-machine 9 par l'intermédiaire d'un dispositif d'isolement galvanique 18 et réalisant une première voie 19 de transmission pour transmettre à l'interface téléphonique des messages émis par l'équipement interface homme-machine.

L'interface téléphonique comprend une première sortie 20, connectée à l'entrée 12 de l'équipement interface homme-machine 9 par l'intermédiaire d'un dispositif d'isolement galvanique 21 et réalisant une seconde voie de transmission 22 pour transmettre à l'équipement interface homme-machine les messages émis ou transmis par l'interface téléphonique 1.

Les premiers moyens interrupteurs 6 comprennent un premier interrupteur 23 à deux états stables, actionnable mécaniquement par l'utilisateur, connecté en parallèle sur un contact 24 de relais. Le premier interrupteur 23 est actionné mécaniquement soit par le combiné 8, soit par un bouton presseur accessible par l'utilisateur. Un premier détecteur de position détecte de façon connue la position du premier interrupteur 23, et un second détecteur de position détecte de façon connue la position du bouton presseur. Le premier détecteur de position peut être par exemple un interrupteur, actionné de façon connue par un support de combiné. Ce premier détecteur est connecté à une sixième entrée 25 de l'interface téléphonique 1, et signale les positions décroché et raccroché. Le second détecteur de position est connecté à une septième entrée 26 de l'interface téléphonique 1 pour signaler l'actionnement du bouton poussoir, permettant par exemple la prise de ligne sans décrocher.

Le contact de relais 24 est commandé par une bobine 27 alimentée par l'interface téléphonique 1 auquel elle est connectée par la sortie 28.

Le clavier de commande 3 comprend des touches numériques et des touches de commande habituelles pour assurer les fonctions connues habituelles des postes téléphoniques. L'ensemble selon la présente invention comprend également des touches alphabétiques et d'autres touches de fonction pour assurer l'utilisation habituelle d'un équipement d'interface homme-machine. Ces touches alphabétiques et de fonctions complémentaires peuvent être soit insérées avec les touches numériques du clavier 3 de l'interface téléphonique, soit regroupées selon un second clavier 29 électriquement séparé du clavier 3 et connecté à une entrée 30 de l'équipement interface homme-machine.

L'interface téléphonique est alimenté par sa seconde entrée 4. Lorsque le bouclage de ligne est établi, l'interface téléphonique est alimenté par la ligne. Lorsque la ligne est débouclée, l'interface téléphonique est alors alimenté par une alimentation locale. On peut utiliser une alimentation locale distincte reliée au secteur par l'intermédiaire d'un transformateur d'isolement. Toutefois on pourra préférer utiliser le transformateur d'isolement de l'équipement d'interface homme-machine, et alimenter l'interface téléphonique par la sortie alimentation 11 de l'équipement d'interface homme-machine 9. Des moyens d'isolement galvanique assurent en permanence l'isolation entre la ligne 5 et l'alimentation 11 locale. Ainsi l'isolation entre la ligne 5 et le secteur 10 est assurée par deux barrières successives, la seconde barrière étant le transformateur d'isolement de l'alimentation locale de l'équipement d'interface homme-machine 9.

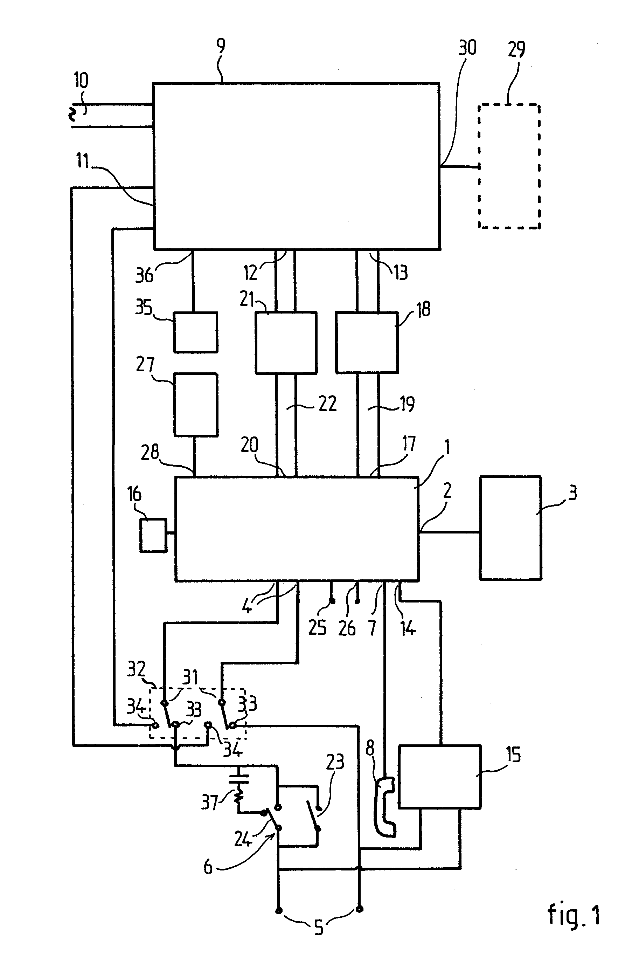

Dans un premier mode de réalisation, représenté sur la figure 1, la seconde entrée 4 de l'interface téléphonique 1 est connectée aux bornes communes 31 d'un relais d'aiguillage 32 à deux contacts repos-travail dont les bornes repos 33 sont connectées à la ligne 5 par l'intermédiaire des premiers moyens interrupteurs 6, et dont les bornes travail 34 sont connectées à la sortie alimentation 11 de l'équipement interface homme-machine 9. Les contacts du relais d'aiguillage 32 sont actionnés par une bobine 35 commandée et alimentée par l'équipement d'interface homme-machine 9 auquel elle est connectée par sa sortie 36. Dans ce mode de réalisation, le relais d'aiguillage 32 assure tantôt l'alimentation de l'interface téléphonique par la ligne et son isolement galvanique de l'alimentation locale 11, tantôt l'alimentation par l'alimentation locale 11 et son isolement galvanique de la ligne 5. Ainsi, la ligne 5 est en permanence isolée de l'alimentation locale 11.

Les interfaces téléphoniques habituellement utilisés pour la réalisation de postes téléphoniques à clavier comprennent généralement un microprocesseur et des circuits logiques programmables assurant de façon connue les fonctions de commande de sonnerie, de génération et émission sur la ligne téléphonique de signaux de numérotation commandés par le clavier 3, de transmission de modulations entre la ligne et le combiné 8, de mise hors service des circuits de modulation et de sonnerie pendant la numerotation. L'interface téléphonique de la présente invention pourra être réalisé de la même façon connue, mais ses circuits devront être programmés pour assurer en outre des fonctions de commande des premiers moyens interrupteurs 6, de commande du relais d'aiguillage 32, et de transmission par les voies de transmission 19 et 22. En particulier l'interface téléphonique doit être programmé pour assurer les fonctions suivantes :

- à réception d'un signal sur les entrées 6 et/ou 7 en provenance des détecteurs de position, générer un signal de décroché transmis à l'interface homme-machine par la première sortie 20 ;

- à réception sur la cinquième entrée 17 d'un ordre de bouclage émis par l'équipement interface homme-machine, fermer le contact de relais 24 pour établir le bouclage de ligne ;

- à réception sur l'entrée 26 d'un ordre de prise de ligne sans décroché, par suite d'une action mécanique fugitive de l'utilisateur sur le bouton poussoir correspondant, provoquer la fermeture du contact de relais 24.

L'équipement d'interface homme-machine peut être un dispositif connu, programmable, assurant les fonctions habituelles d'un terminal d'ordinateurs. Il doit toutefois être programmé pour assurer notamment les fonctions supplémentaires suivantes :

- à réception sur son entrée 12 d'un signal de décroché émis par l'interface téléphonique, emettre sur la sortie 36 un signal forçant le relais d'aiguillage 32 en position de repos ;

- lors de l'établissement de la tension du secteur 10, vérifier que l'état de l'interface téléphonique est au repos, et dans l'affirmative et après un délai prédéterminé, produire un signal sur la sortie 36 pour forcer le relais d'aiguillage 32 en position travail, c'est à dire établir la connexion entre les bornes communes 31 et les bornes travail 34. La vérification de l'état de repos de l'interface téléphonique peut se faire de la façon suivante : à l'état de repos, l'interface téléphonique est soit alimenté par l'alimentation locale 11, et émet des signaux de repos par la voie de transmission 22, soit non alimenté et n'émet aucun signal ; l'équipement d'interface homme-machine détecte ces signaux de repos ou l'absence de signaux sur son entrée 12. On peut prévoir une autre séquence, par exemple l'envoi d'un signal sur la sortie 13, à l'interface téléphonique qui répond, s'il est alimenté et au repos, par un signal de repos détecté sur l'entrée 12 par l'équipement d'interface homme-machine, et qui ne répond pas s'il n'est pas alimenté.

- à la disparition de la tension secteur 10, des moyens de détection internes à l'équipement d'interface homme-machine génèrent un signal qui est traité en urgence par l'équipement d'interface homme-machine pour produire une tension sur la borne de sortie 36 et forcer immé-

- 8 -                          0130928

diatement le relais d'aiguillage 32 en position repos. Cette fonction permet de faire basculer rapidement le relais d'aiguillage 32 pendant que l'alimentation locale de l'équipement d'interface homme-machine a encore suffisamment d'énergie, accumulée notamment dans les condensateurs, ce qui évite un basculement trop lent sur les aiguillages 32.

- à réception d'un signal de raccroché émis par l'interface téléphonique sur la voie de transmission 22, émettre un signal sur la sortie 36 pour forcer le relais d'aiguillage en position travail et alimenter immédiatement l'interface téléphonique par l'alimentation locale 11.

Le fonctionnement du dispositif est le suivant : en position de combiné raccroché, et sans prise de ligne directe, l'ensemble est alimenté par l'alimentation locale de l'équipement d'interface homme-machine, l'interface téléphonique étant alimenté par sa seconde entrée 4 par l'intermédiaire du relais d'aiguillage 32 en position travail. Les commandes du clavier 3 sont transmises à l'équipement d'interface homme-machine par la seconde voie de transmission 22. En cas de disparition de secteur d'alimentation, le relais d'aiguillage 32 est immédiatement basculé en position repos, isolant l'interface téléphonique de l'équipement d'interface homme-machine. Si la tension secteur réapparaît, l'équipement d'interface homme-machine commande, après vérification de l'état de repos de l'interface téléphonique, le basculement du relais d'aiguillage 32 en position travail pour alimenter localement l'interface téléphonique. En cas de décroché ou de prise de ligne directe, le relais d'aiguillage 32 est immédiatement forcé en position repos. En cas de réception sur la ligne 5 d'un appel téléphonique, des signaux alternatifs d'appel sont interprétés par le détecteur d'appel 15 qui produit un signal de commande de sonnerie sur la quatrième entrée 14 de l'interface téléphonique 1. Dans le cas où l'interface téléphonique n'est pas alimenté par l'alimentation locale 11, il est alors alimenté par la ligne 5 à travers un circuit RC 37 connecté en parallèle sur les premiers moyens interrupteurs 6.

Les dispositifs d'isolement galvanique 18 et 21 des voies de transmission 19 et 22 pourront être réalisés de toutes manières connues, et par exemple par des dispositifs à couplage optique ou magnétique.

L'alimentation de l'interface téléphonique peut être réalisée selon un second mode de réalisation représenté sur la

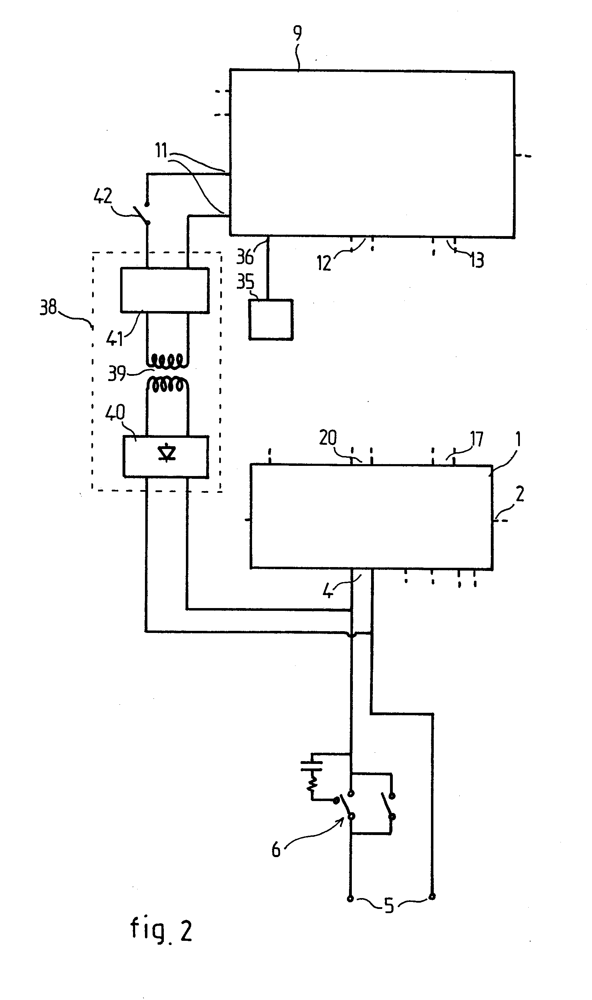

figure 2. Sur cette figure on n'a représenté que les éléments qui diffèrent par rapport au premier mode de réalisation de la figure 1. Dans ce second mode de réalisation, la seconde entrée 4 de l'interface téléphonique est connectée en permanence aux bornes de sortie des premiers moyens interrupteurs 6. Cette seconde entrée 4 est également alimentée par l'alimentation locale 11 de l'équipement d'interface homme-machine par l'intermédiaire d'un dispositif d'isolement galvanique 38. On pourra par exemple utiliser comme dispositif d'isolation galvanique un transformateur 39 suivi d'un redresseur 40, le transformateur 39 pouvant être alimenté par un dispositif à découpage 41. Il est nécessaire de prévoir en outre un second contact de relais 42, connecté en série soit à l'entrée soit à la sortie du dispositif d'isolement galvanique 38. Le second contact de relais 42 est actionné par la bobine 35 alimentée par la sortie36 de l'équipement d'interface homme-machine.

Dans ce second mode de réalisation, on programme l'équipement d'interface homme-machine et l'interface téléphonique pour laisser en permanence en position de fermeture le second contact de relais 42 sauf dans les cas où le bouclage de ligne est établi. Pour cela, à réception d'un signal de décroché ou de prise de ligne directe, l'interface téléphonique génère un signal transmis à l'équipement d'interface homme-machine qui commande l'ouverture du second contact de relais 42.

Dans ce second mode de réalisation, on pourra simplifier la réalisation du dispositif d'isolement galvanique 38 en alimentant ce dispositif en énergie alternative, ce qui permet de supprimer le dispositif de découpage 41.

Dans le premier mode de réalisation, et selon une autre variante, le relais d'aiguillage 32 peut être commandé par une bobine directement alimentée par l'interface téléphonique 1. Il convient dans ce cas de disposer d'une source d'énergie isolée pour alimenter la bobine du relais d'aiguillage 32. L'ordre de basculement du relais d'aiguillage émis par l'équipement d'interface homme-machine est transmis par la première voie de transmission 19 à l'interface téléphonique qui provoque le basculement du relais d'aiguillage 32.

La présente invention n'est pas limitée aux modes de réalisation qui ont été explicitement décrits, mais elle en inclut les diverses variantes et généralisation contenues dans le domaine des revendications ci-après.

REVENDICATIONS

1 - Ensemble poste téléphonique - terminal d'ordinateurs, comprenant d'une part un circuit de sonnerie (16) et un interface téléphonique (1) dont une première entrée (2) est connectée à un clavier de commande (3), une seconde entrée (4) à deux conducteurs connectée à une ligne téléphonique (5) par l'intermédiaire de premiers moyens interrupteurs (6), une troisième entrée (7) connectée à un combiné téléphonique (8), l'interface téléphonique assurant de façon connue les fonctions habituelles de génération et émission sur la ligne téléphonique de signaux de numérotation commandés par le clavier de commande (3), de transmission de modulations entre la ligne (5) et le combiné (8), de mise hors service des circuits de modulation et de sonnerie pendant la numérotation, l'ensemble comprenant d'autre part un équipement d'interface homme-machine (9), muni d'une première alimentation locale connectée au secteur (10) par l'intermédiaire d'un transformateur d'isolement, et assurant de façon connue les fonctions de terminal d'ordinateurs, caractérisé en ce que l'alimentation de l'interface téléphonique (1) est assurée par sa seconde entrée (4) qui est alimentée tantôt par la ligne téléphonique (5) tantôt par une seconde alimentation locale connectée au secteur (10) par l'intermédiaire d'un transformateur d'isolement, en ce que des premiers moyens d'isolement galvanique (32, 38) assurent en permanence l'isolement entre la seconde alimentation locale (11) et la ligne (5), et en ce que l'interface téléphonique (1) est relié à l'équipement interface homme-machine (9) par des voies de transmission (19, 22) de messages comportant des seconds moyens d'isolement galvanique (18, 21).

2 - Ensemble selon la revendication 1, caractérisé en ce que la seconde entrée (4) de l'interface téléphonique (1) est connectée d'une part à la ligne (5) par l'intermédiaire des premiers moyens interrupteurs (6), et d'autre part à l'alimentation locale (11) par l'intermédiaire des premiers moyens d'isolement galvanique (38) connectés en série avec un second contact de relais (42), les premiers moyens interrupteurs et le second contact de relais étant actionnés par des moyens de commande selon une séquence pré-établie fonction de la phase d'exploitation.

3 - Ensemble selon la revendication 1, caractérisé en ce que la seconde entrée (4) de l'interface téléphonique (1) est connectée aux bornes communes (31) d'un relais d'aiguillage (32) à deux contacts repos-travail dont les bornes repos (33) sont connectées à la ligne (5) par l'intermédiaire d'un premier moyen interrupteur (6) et dont les bornes travail (34) sont connectées à une seconde alimentation (11) locale, le relais d'aiguillage (32) et le premier moyen interrupteur (6) étant actionnés par des moyens de commande selon une séquence pré-établie fonction de la phase d'exploitation.

4 - Ensemble selon la revendication 3, caractérisé en ce que le premier moyen interrupteur (6) comprend un premier interrupteur (23) à deux états stables, actionnable mécaniquement par l'utilisateur, connecté en parallèle sur un contact de relais (24) actionné par l'interface téléphonique (1).

5 - Ensemble selon la revendication 4, caractérisé en ce que le relais d'aiguillage (32, 35) est actionné par l'équipement d'interface homme-machine (9).

6 - Ensemble selon l'une quelconque des revendications 3 à 5, caractérisé en ce que :

- l'interface téléphonique (1) comprend une quatrième entrée (14) connectée à un détecteur d'appels (15) à isolation galvanique lui-même connecté à la ligne téléphonique (5), l'interface téléphonique assurant la commande de sonnerie (16) lors de la réception d'un signal d'appel sur la ligne téléphonique ;

- l'interface téléphonique comprend une cinquième entrée (17) connectée à une sortie (13) de l'équipement interface homme-machine par l'intermédiaire d'un dispositif d'isolement galvanique (18) et réalisant une première voie de transmission (19) pour transmettre à l'interface téléphonique des messages émis par l'équipement d'interface homme-machine, et comprend une première sortie (20) connectée à une entrée (12) de l'équipement interface homme-machine par l'intermédiaire d'un dispositif d'isolement galvanique (21) et réalisant une seconde voie de transmission (22) pour transmettre à l'équipement d'interface homme-machine les messages émis ou transmis par l'interface téléphonique ;

- l'interface téléphonique comprend une sixième entrée (23) connectée à un détecteur de position du premier interrupteur (23) signalant les états décroché et raccroché ;

- l'interface téléphonique (1) assure la transmission à l'équipement interface homme-machine des signaux émis par le clavier (3) par l'intermédiaire de la seconde voie de transmission (22) ;

- l'ensemble comprend en outre des moyens pour assurer les séquences suivantes :

. lorsque l'utilisateur veut prendre la ligne et actionne le premier interrupteur (24), le détecteur de position correspondant produit un signal envoyé à l'interface téléphonique (1) qui génère alors un signal de décroché transmis à l'interface homme-machine (9) par la seconde voie de transmission (22), l'interface homme-machine forçant alors le relais (32) d'aiguillage en position de repos ;

. à l'établissement d'une tension secteur (10), l'équipement d'interface homme-machine vérifie que l'état de l'interface téléphonique (1) est au repos, et dans l'affirmative et après un délai prédéterminé, il force le relais d'aiguillage (32) en position travail pour alimenter l'interface téléphonique par l'alimentation locale ;

. à la disparition de l'alimentation secteur, l'interface homme-machine (9) force le relais d'aiguillage (32) en position repos.

7 - Ensemble selon la revendication 4, caractérisé en ce que le contact de relais (24) est fermé par l'interface téléphonique (1), d'une part dans le cas d'une prise de ligne sans décroché, par suite d'une action mécanique fugitive de l'utilisateur sur un bouton poussoir interrupteur connecté en parallèle sur le contact de relais, d'autre part dans le cas d'un ordre de bouclage émis par l'équipement d'interface homme-machine (9) et transmis à l'interface téléphonique (1).

8 - Ensemble selon la revendication 7, caractérisé en ce qu'il comprend un premier détecteur de position associé au premier interrupteur (23) pour produire un signal sur une sixième entrée (25) de l'interface téléphonique pour signaler le décroché, et un second détecteur de position associé au bouton poussoir interrupteur pour produire un signal sur une septième entrée (27) de l'interface téléphonique et signaler la prise de ligne sans décroché.

0130928

fig.1

fig. 2

Office européen des brevets

**RAPPORT DE RECHERCHE EUROPEENNE**

0130928

Numéro de la demande

EP 84 42 0108

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 452 842 (LE MATERIEL TELEPHONIQUE)<br>* page 2, ligne 14 - page 7, ligne 2; figures * | 1-8 | H 04 M 11/06 |
| A | L'ONDE ELECTRIQUE, vol. 62, no. 10, octobre 1982, pages 48-53, Paris, FR; J. ANDRY et al.: "Terminal d'abonné multiservice pour réseau local numérique"<br>* page 52, colonne 2, lignes 14-36 * | 1 | |

DOMAINES TECHNIQUES RECHERCHES (Int. Cl. ³)

H 04 M

Le présent rapport de recherche a été établi pour toutes les revendications

| Lieu de la recherche | Date d'achèvement de la recherche | Examinateur |
|---|---|---|
| LA HAYE | 01-10-1984 | KEPPENS P.M.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82